# EUROPÄISCHE PATENTANMELDUNG

(11) **EP 1 120 524 A2**
(43) Veröffentlichungstag der Anmeldung: **01.08.2001**
(21) Anmeldenummer: 01101024.6
(22) Anmeldetag: 18.01.2001
(51) Int. Cl.: E05F 5/02, E05F 5/10

(54) **Dämpfungseinrichtung für bewegbare Möbelteile**

(30) Priorität: 27.01.2000 AT 1172000
(71) Anmelder: Julius Blum Gesellschaft m.b.H., 6973 Höchst (AT)
(72) Erfinder: Gasser, Ingo, 6973 Höchst (AT)
(74) Vertreter: Torggler, Paul Norbert, Dr.

(57) **Zusammenfassung**

Eine Dämpfungseinrichtung für bewegbare Möbelteile mit einem an einem Möbelteil montierbaren Zylinder (1), in dem ein mit einer Kolbenstange (2) verbundener Kolben (3) linear verfahrbar ist. Im Zylinder (1) ist ein Dämpfungsmedium (4) vorgesehen. Die Kolbenwand (10) und die Zylinderwand (11) grenzen einen Spalt (12) ab, in dem zumindestens ein Teil (4') des Dämpfungsmediums (4) vorhanden ist.

## Beschreibung

Die Erfindung bezieht sich auf Dämpfungseinrichtung für bewegbare Möbelteile mit einem an einem Möbelteil montierbaren Zylinder, in dem ein mit einer Kolbenstange verbundener Kolben linear verfahrbar ist, wobei im Zylinder ein Dämpfungsmedium vorgesehen ist.

Derartige Dämpfungseinrichtungen werden beispielsweise bei Möbeltüren und bei Schubladen verwendet. Sie dienen dazu, beim Schließen einer Türe oder einer Schublade den bewegbaren Möbelteil vor Erreichen seiner Schließstellung stark abzubremsen. Auf diese Weise wird verhindert, daß die betroffenen Möbelteile mit zuviel Wucht und entsprechender Geräuschentwicklung ihre Schließstellung erreichen. Des weiteren wird verhindert, daß die Türe oder die Schublade beim Schließen durch überschüssigen Schwung wieder geöffnet wird.

Eine Dämpfungseinrichtung der eingangs erwähnten Art ist beispielsweise aus der DE 299 07 931 U1 bekannt.

Aufgabe der Erfindung ist es, eine Dämpfungseinrichtung der eingangs erwähnten Art dahingehend zu verbessern, daß ein sanfteres Abbremsen der bewegbaren Möbelteile erzielt wird.

Die erfindungsgemäße Aufgabe wird dadurch gelöst, daß die Kolbenwand und die Zylinderwand einen Spalt abgrenzen, in dem zumindestens ein Teil des Dämpfungsmediums vorhanden ist.

Dadurch, daß der Spalt mit dem Dämpfungsmedium verfüllt ist, wird ein Großteil der Dämpfung durch die Scherwirkung des Dämpfungsmediums in diesem Spalt hervorgerufen.

Vorteilhaft wird als Dämpfungsmedium eine Flüssigkeit mit hoher Viskosität eingesetzt, beispielsweise Silikonöl.

Sehr gute Dämpfungsergebnisse wurden mit einem Dämpfungsmedium erzielt, das eine Viskosität von über 2, vorzugsweise 10 Pascalsekunden aufwies.

Ein Ausführungsbeispiel der Erfindung sieht vor, daß der Kolben als zusammenklappbarer Kolben ausgeführt ist. Vorteilhaft wird der Kolben dabei von zwei Kolbenhälften gebildet, die an der Kolbenstange drehbar angelenkt sind. Die Kolbenhälften können von einer Feder beaufschlagt werden, die die Öffnungsbewegung der Kolbenhälften unterstützt.

Ein weiteres Ausführungsbeispiel der Erfindung sieht vor, daß im Kolben Durchtrittsöffnungen für das Dämpfungsmedium vorgesehen sind.

Nachfolgend werden verschiedene Ausführungsbeispiele der Erfindung anhand der Figuren der beiliegenden Zeichnungen beschrieben. Es zeigen:
- Die Fig. 1 bis 3: Längsschnitte durch eine erfindungsgemäße Dämpfungseinrichtung, wobei sich der Kolben und die Kolbenstange in verschiedenen Stellungen der Dämpfungsbewegung befinden,
- die Fig. 4: einen Längsschnitt analog der Fig. 1, wobei ein weiteres Ausführungsbeispiel des Kolbens gezeigt ist,
- die Fig. 5: den Ausschnitt A der Fig. 2,
- die Fig. 6 die Fig. 7 und 8: den Ausschnitt B der Fig. 5, jeweils einen Längsschnitt durch die erfindungsgemäße Dämpfungseinrichtung während der Rückholbewegung des Kolbens und der Kolbenstange,
- die Fig. 9 bis 16: analoge Schnitte zu den Fig. 4 bis 8 durch ein weiteres Ausführungsbeispiel einer erfindungsgemäßen Dämpfungseinrichtung,
- die Fig. 17: einen Querschnitt durch die erfindungsgemäße Dämpfungseinrichtung, wobei der Kolben in der Rückholstellung gezeigt ist,
- die Fig. 18: einen Querschnitt durch die erfindungsgemäße Dämpfungseinrichtung, wobei der Kolben in der Funktionsstellung gezeigt ist, und
- die Fig. 19 bis 24: Querschnitte analog den Fig. 17 und 18, wobei weitere Ausführungsbeispiele des Kolbens gezeigt sind.

Die erfindungsgemäße Dämpfungseinrichtung besteht aus einem geschlossenen Zylinder 1, einer Kolbenstange 2 und einem Kolben 3.

Der Kolben 3 ist in den gezeigten Ausführungsbeispielen als Klappkolben mit zwei zusammenklappbaren Kolbenhälften 3' ausgebildet.

Die Kolbenhälften 3' lagern mittels einer Achse 8 an der Kolbenstange 2.

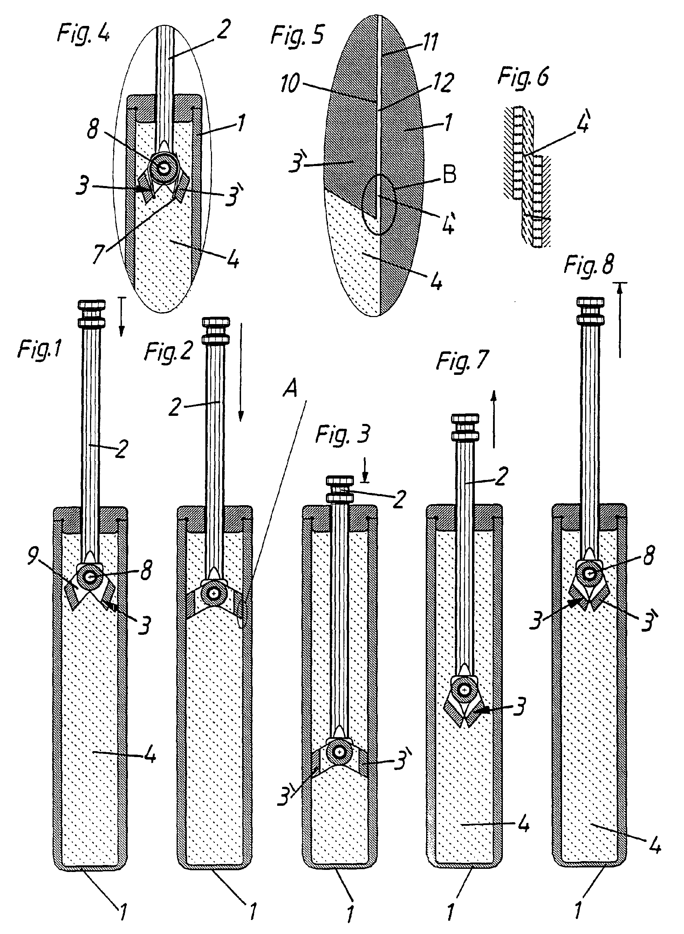

Im Ausführungsbeispiel nach der Fig. 4 ist eine Biegefeder 7 vorgesehen, die die Kolbenhälften 3' beaufschlagt und den Kolben 3 in die beispielsweise in der Fig. 2 gezeigte Arbeitsstellung drückt.

In den gezeigten Ausführungsbeispielen ist der Kolben 3 mit Durchtrittsöffnungen 9 für das Dämpfungsmedium 4 ausgeführt. Das Dämpfungsmedium 4 wird vorzugsweise von einem Öl mit hoher Viskosität gebildet.

Der Kolben 3 ist so bemessen, daß die Kolbenwand 10 und die Zylinderwand 11 in der Arbeits-, d.h. Dämpfungsstellung des Kolbens 3 einen Spalt 12 abgrenzen. Innerhalb des Spaltes 12 befindet sich ein Teil 4' des Dämpfungsmediums 4, beispielsweise ein Silikonöl.

Durch die hohe Viskosität des Dämpfungsmediums wird ein Großteil der Dämpfung durch die Scherwirkung des Dämpfungsmediums 4' im Spalt 12 zwischen der Kolbenwand 10 und der Zylinderwand 11 erzielt. Die Breite des Spaltes 12 liegt zwischen 0,01 mm und 1 mm, vorzugsweise zwischen 0,01 mm und 0,5 mm.

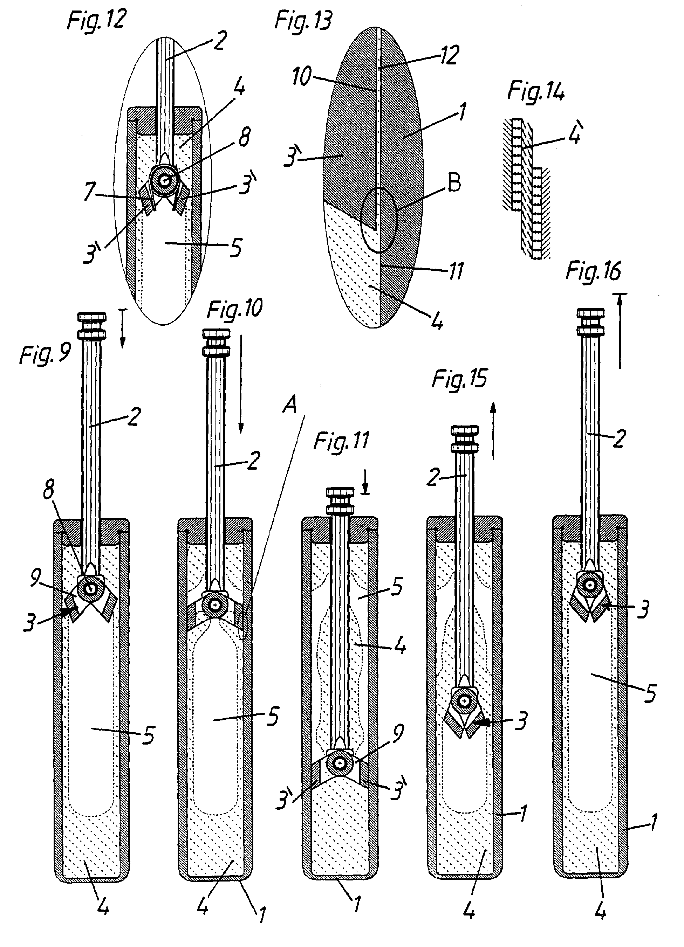

Aus diesem Grund ist es nicht notwendig, daß der Zylinder 1 vollständig mit dem Dämpfungsmedium 4 gefüllt ist. Es kann sich, wie in den Fig. 9 bis 16 gezeigt, eine relativ geringe Menge des Dämpfungsmediums 4 im Zylinder 1 befinden, wobei das Dämpfungsmedium 4 Luftblasen 5 einschließt. Das Volumen des Dämpfungsmediums kann unter der Hälfte des Volumens des Zylinders 1 liegen. Vorzugsweise wird es 25 Prozent des Zylindervolumens ausmachen. Der Spalt 12 zwischen der Kolbenwand 10 und der Zylinderwand 11 ist jedoch auch in diesem Fall mit Bremsmedium 4 gefüllt, das an den Wänden 10, 11 haftet.

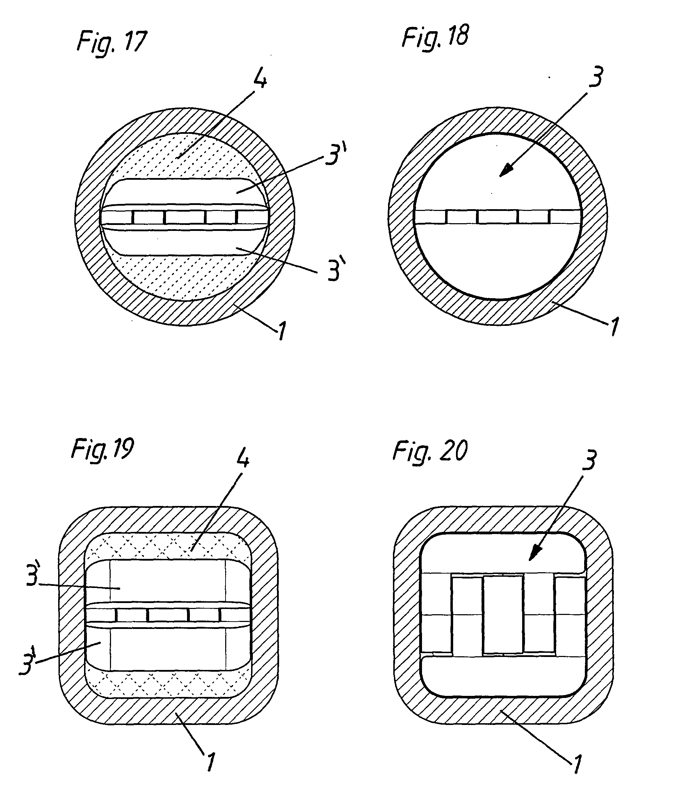

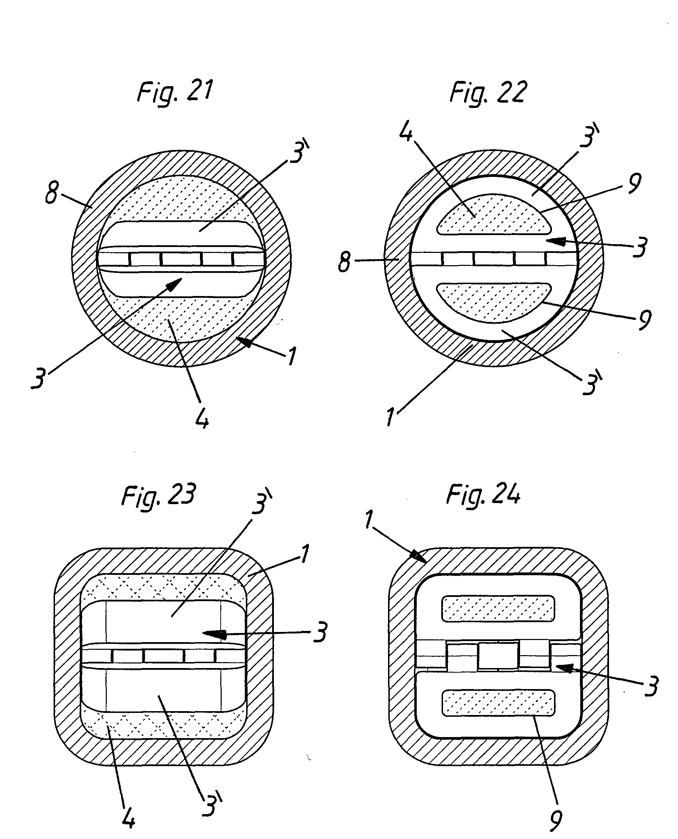

Wie aus den Fig. 17 bis 24 ersichtlich, können der Zylinder 1 und der Kolben 3 sowohl mit kreisförmigem als auch mit rechteckigem Querschnitt ausgeführt sein. Ebenso kann der Kolben, wie in den Fig. 17 bis 20 gezeigt, ohne Durchtrittsöffnungen oder, wie in den Fig. 21 bis 24 gezeigt, mit Durchtrittsöffnungen 9 ausgebildet sein.

Je nach der Dimensionierung des Spaltes 12 stellt sich eine entsprechende Dämpfwirkung ein. Der Zylinder 1 kann beispielsweise an einer Möbelseitenwand montiert werden derart, daß eine Türe beim Schließvorgang auf die Kolbenstange 2 drückt.

Ebenso kann die Dämpfungseinrichtung den Verschiebeweg einer Schublade sowohl beim Einfahren als auch beim Ausziehen der Schublade begrenzen. In diesem Fall kann die Dämpfungseinrichtung in eine Ausziehführungsgarnitur für die Schublade integriert sein.

Nach erfolgter Dämpfung kann die Rückführung des Kolbens 3 in die Funktionsstellung in herkömmlicher Art und Weise durch eine Feder erfolgen. Beispielsweise kann im Zylinder 1 eine Schraubenfeder angeordnet sein, die den Kolben 3 in die Ausgangsstellung drückt. Dabei muß die Federkraft geringer als die Schließkraft sein.

## Patentansprüche

1. Dämpfungseinrichtung für bewegbare Möbelteile mit einem an einem Möbelteil montierbaren Zylinder, in dem ein mit einer Kolbenstange verbundener Kolben linear verfahrbar ist, wobei im Zylinder ein Dämpfungsmedium vorgesehen ist, dadurch gekennzeichnet, daß die Kolbenwand (10) und die Zylinderwand (11) einen Spalt (12) abgrenzen, in dem zumindestens ein Teil (4') des Dämpfungsmediums (4) vorhanden ist.

2. Dämpfungseinrichtung nach Anspruch 1, dadurch gekennzeichnet, daß die Breite des Spaltes (12) zwischen 0,01 mm und 1 mm beträgt.

3. Dämpfungseinrichtung nach Anspruch 2, dadurch gekennzeichnet, daß die Breite des Spaltes (12) zwischen 0,01 mm und 0,5 mm beträgt.

4. Dämpfungseinrichtung nach einem der Ansprüche 1 bis 3, dadurch gekennzeichnet, daß als Dämpfungsmedium (4) eine Flüssigkeit mit hoher Viskosität eingesetzt ist.

5. Dämpfungseinrichtung nach Anspruch 4, dadurch gekennzeichnet, daß die Viskosität des Dämpfungsmediums (4) über 2, vorzugsweise bei 10 Pascalsekunden liegt.

6. Dämpfungseinrichtung nach einem der Ansprüche 1 bis 5, dadurch gekennzeichnet, daß der Kolben (3) als zusammenklappbarer Kolben ausgeführt ist.

7. Dämpfungseinrichtung nach Anspruch 6, dadurch gekennzeichnet, daß der Kolben (3) zwei Kolbenhälften (3') umfaßt, die an der Kolbenstange (2) drehbar gelagert sind.

8. Dämpfungseinrichtung nach Anspruch 6 oder 7, dadurch gekennzeichnet, daß eine Feder (7) vorgesehen ist, die die Kolbenhälften (3') zur Zylinderwand (11) drückt.

9. Dämpfungseinrichtung nach einem der Ansprüche 1 bis 8, dadurch gekennzeichnet, daß im Kolben (3) Durchtrittsöffnungen (9) für das Dämpfungsmedium (4) vorgesehen sind.

10. Dämpfungseinrichtung nach einem der Ansprüche 1 bis 9, dadurch gekennzeichnet, daß das Volumen des Dämpfungsmediums (4) maximal dem halben Zylindervolumen entspricht.

11. Dämpfungseinrichtung nach Anspruch 10, dadurch gekennzeichnet, daß das Volumen des Dämpfungsmediums (4) maximal 25 Prozent des Zylindervolumens ausmacht.

12. Dämpfungseinrichtung nach einem der Ansprüche 1 bis 11, dadurch gekennzeichnet, daß als Dämpfungsmedium Silikonöl eingesetzt ist.
